# EUROPEAN PATENT APPLICATION

(11) **EP 4 019 167 A1**
(43) Date of publication of application: **29.06.2022**
(21) Application number: 20020641.5
(22) Date of filing: 22.12.2020
(51) Int. Cl.: B22F 9/08, B22F 1/00

(54) **ATOMISATION OF METALLIC MELTS USING LIQUID CO2**

(71) Applicant: Linde GmbH, 82049 Pullach (DE)
(72) Inventor: Ritzén, Ola, 18494 Åkersberga (SE); Dubiez, Sophie, 81369 München (DE); Kaplan, Bartek, 747 94 Stockholm (SE); Dahlstrom, Magnus, 169 51 Solna (SE)
(74) Representative: Gellner, Bernd

(57) **Abstract**

A method of producing a metal powder, the method comprising providing a stream of molten metal; and atomising the metal by directing a jet of fluid towards the stream of molten metal, wherein the fluid comprises liquid carbon dioxide. Advantageously, large amounts of powder can be produced having generally spherical particle morphology, without exposing the powder to water.

## Description

### TECHNICAL FIELD

The present invention relates generally to a method for use in producing metal powder. In particular, but not exclusively, the present invention relates to a method of producing a metal powder for use in additive manufacturing process.

### INTRODUCTION

In general, additive manufacturing (AM) is a manufacturing technology that includes a methodology whereby a heat source melts a feedstock of material which is deposited onto a substrate. Computer control of the movement of the heat source, and the source of the feedstock, makes it possible to build complex components.

As mentioned above, in additive manufacturing the material is deposited layer by layer. Some AM methods, for example, melt or soften the material to produce the layers, such as selective laser melting (SLM) or direct metal laser sintering (DMLS), selective laser sintering (SLS), fused deposition modelling (FDM), or fused filament fabrication (FFF). These additive manufacturing processes are summarized by the term laser powder bed fusion (L-PBF).

For these processes a metal powder is normally used, and for the repeatability of the process it is important to have the powder material with reproducible morphological characteristics, such as shape and size. To provide optimal performance in additive manufacturing operations, it is often desirable that the particles in the powder are as close as possible to spherical, and that they have a narrow size distribution. This facilitates good packaging of the powder and allows the powder to flow well.

Water atomisation, whereby the molten metal is treated with a stream of water at high pressure reaching 1000 bar, is a widely used technique to produce powder for additive manufacturing. Another technique to produce powder is gas atomisation, whereby an argon gas or a mixture of argon and nitrogen are used to atomise molten metal. For both of these atomisation techniques, the resultant metal particles are then sieved into fractions having predetermined size distributions.

It has hitherto been the case that gas atomisation produced particles having more spherical morphology than water atomisation, but it has generally been possible to atomise greater amounts of metal in a water atomisation apparatus than in a gas atomisation apparatus. However, it is known that the shape and size of the powder particles are affected by the composition of the powder. Thus, for example, if iron alloy is used, the carbon content of the alloy affects the morphology of the particles during atomisation - the higher the carbon content, the more spherical powder particles are obtained. It is believed that the evolution of CO₂ during the water atomisation of alloys having a high carbon content helps to produce this spherical morphology, although under certain circumstances it can also lead to the formation of hollow particles and other undesired shapes.

It is an object of this invention to at least mitigate one or more problems associated with the prior art and to provide a method for producing a metal powder for additive manufacturing process.

### SUMMARY OF THE INVENTION

According to an aspect of the invention for which protection is sought, there is provided a method of producing a metal powder, the method comprising:
providing a stream of molten metal;
atomising the metal by directing a jet of fluid towards the stream of molten metal, wherein the fluid comprises liquid carbon dioxide. In an embodiment, the method is a method of producing a metal powder for use in additive manufacturing processes.

Advantageously, atomising the metal by the stream of liquid carbon dioxide allows to reduce or even prevent carbon evolution from the metal. This is important when carbon-containing alloys are used, as atomising them with a conventional medium such as water leads to the depletion of carbon from the metal and thus changing the composition in a potentially-undesirable manner. The high concentration of CO₂ around the metal during the atomisation process is also believed to promote the formation of spherical particles.

In an embodiment, the fluid is pressurised. Advantageously, by pressurising the fluid it is possible to achieve high fluid velocities before colliding the fluid with a molten stream of metal. This results in more efficient break down of the molten metal into droplets before the powder solidification occurs.

In another embodiment, the fluid is supercritical carbon dioxide. Advantageously, supercritical carbon dioxide possesses both gas-like and liquid-like properties, and therefore has a heat transfer performance different for using conventional gases and/or liquids. The use of supercritical CO₂ allows to cool down molten metal more efficiently.

In yet another embodiment, the jet of fluid is supplied through a nozzle. In an embodiment, the nozzle is a convergent-divergent nozzle. Advantageously, supplying both molten metal and the pressurised carbon dioxide through the nozzle having both a divergent and convergent sections allows for better mixing at the point of exit of the two components due to a change in the speed of the components at the narrowing point, and thus preventing blockage of the nozzle opening.

In another embodiment, the fluid is supplied at at least 5 bar pressure. In yet another embodiment, the fluid is supplied at less than -70 °C. Advantageously, these parameters allow to keep carbon dioxide in the liquid state to be used as a flowable atomising medium.

In an embodiment, the metal comprises iron or iron alloy, preferably a steel. Advantageously, the use of iron or alloyed steel alloys allows for producing a wide variety of components for automotive, industrial, food processing and medical applications.

In another embodiment, the metal powder comprises substantially spherical solid particles having an aspect ratio between 1 and 1.2. Advantageously, the presence of the spherical or near-spherical particles allows for an enhanced powder flowability and better bulk density which, in turn, will lead to a better quality of the finished product. Smooth round particles possess better packing properties and therefore spread more evenly on the powder bed and form a uniform layer.

### BRIEF DESCRIPTION OF THE DRAWINGS

Embodiments of the invention will now be described by way of example only, with reference to the accompanying figures, in which:
Figure 1 shows a system for producing metal powder using a water atomisation process;
Figure 2 shows a rough schematic view of liquid CO₂ atomiser according to the present invention; and
Figure 3 shows a flow chart illustrating a method of producing a metal powder in an embodiment of the present invention.

### DETAILED DECSRIPTION

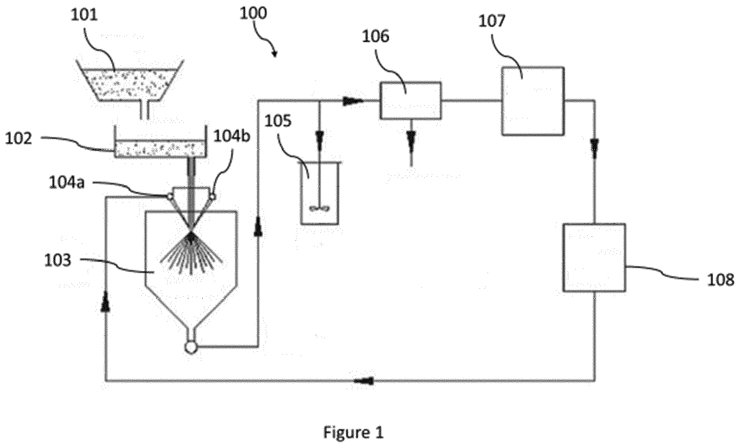

Figure 1 shows a prior art water atomisation system 100 for producing metal particles for additive manufacturing. The metal is supplied into a ladle or a melter 101 where it is heated up to the desired temperature, and then transferred into a tundish 102 to avoid splashing and give a smoother flow. A stream of the molten metal is then supplied into an atomising chamber 103 where it is mixed with water supplied through the nozzles 104a, 104b. The molten metal the undergoes atomisation process under contact with water to form micron sized particles. It is understood that water is supplied into the chamber 103 under pressure of up to 1000 bar. The water and metal particles form a slurry at the bottom of the chamber 103, said slurry comprising about 90% water and 10% metal particles. The slurry then is transferred either in a leaching tank 105 or into a dewatering system 106. The recovered water from either process is then transferred into a system 107 for cooling down, filtering and further recycling. A pump or a high pressure pump 108 pumps the recycled water back into the atomising system.

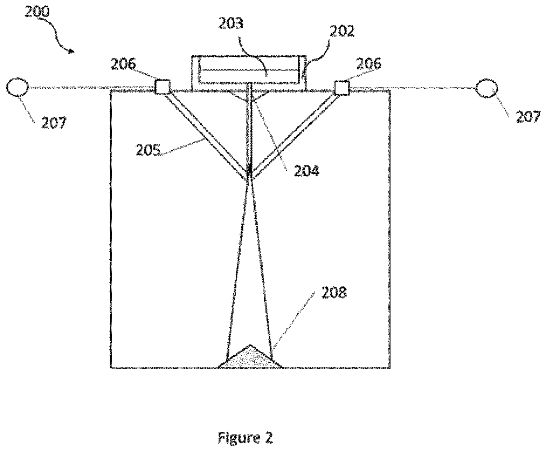

Figure 2 shows an atomiser 200 to be used for producing metal powder according to an embodiment of the present invention. It comprises the chamber 201 where the mixing of the metal and the liquid CO₂ occurs, and the furnace 202 connected to the chamber. A metal 203 is supplied to the furnace 202 and is subsequently heated to reach the melting temperature. It is understood that the metal 201 can be iron or iron alloy. The iron alloy may include, besides other elements typically used in alloys, carbon from 0.03% to greater than 1% to increase hardness and strength of iron. The temperature in the furnace 202 depends on the type of metal or metal alloy and must be sufficient to maintain the metal in a molten state.

The molten metal 203 is then supplied into the chamber 201 through an opening 204. The molten metal 203 flows downwards under gravity and then it is subsequently treated with a one or more jets 205 of fluid. The fluid may be supplied into the chamber under pressure, then a pressure system 207 may be used. The fluid is supplied into the chamber 201 through a nozzle 206. It is understood that different kind of nozzles can be used, such as Venturi nozzle or de Laval nozzle, with the latter being preferential choice of nozzle. Advantageously, by using the de Laval, or divergent-convergent, nozzle it is possible to achieve higher acceleration rates of the passing fluid, thus resulting in a better mixing of the fluid with the molten metal.

The fluid 205 can be liquid carbon dioxide. In this case, the pressure of at least 5 bar and the temperature of less than -70 °C are used in order to maintain the liquid state of the carbon dioxide and supply it into the chamber in the liquid form. Optionally, the fluid cab be supercritical carbon dioxide, to achieve a more rapid cooling of the molten metal 203.

It is known that during conventional gas and/or water atomisation process of metal particles manufacturing, a migration of carbon may occur for carbon-containing alloys. This is disadvantageous as the final composition of the alloy will change, thus in turn changing its physico-chemical properties. In the present invention this problem is alleviated by using liquid carbon dioxide as atomising medium, thus preventing the depletion of carbon from the final composition. Furthermore, it has been discovered that by using liquid carbon instead of water it is possible to atomise a large amount of molten metal whilst better controlling the shape and size of the resultant metal particles, and avoiding and undesirable chemical reactions that could occur when the metal is exposed to water.

Once the jet of cold fluid leaves the nozzle 206, it meets the stream of molten metal 204. Due to the rapid expansion of CO₂, the solid spherical or near-spherical uniform particles of metal powder 208 are formed and further deposited at the bottom of chamber 201. By the "spherical or near-spherical particles" it is understood that the particles have an aspect ratio of between 1 and 2, preferably between 1 and 1.5, more preferably between 1 and 1.2. In addition to the rapid expansion of the CO₂, it is hypothesised that the presence of CO₂ in a high concentration around the particles as they are atomised may assist with the formation of spherical particles.

Advantageously, the formation of spherical or near-spherical particles leads to a better spreadability of the resultant powder when it is subsequently used for an additive manufacturing process.

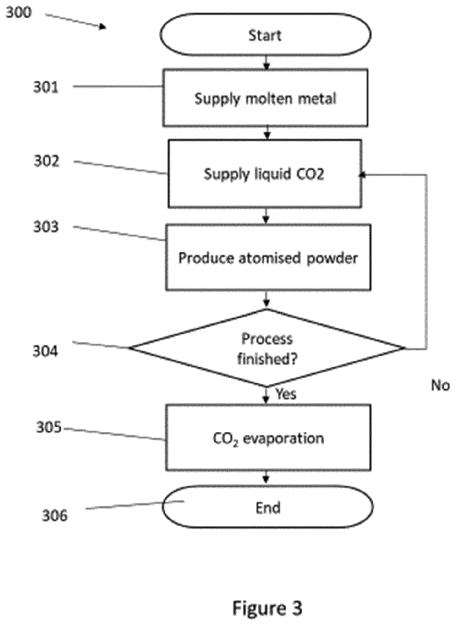

A method of producing a powder using liquid CO₂ will be described in more detail below, with respect to Figure 3.

Figure 3 shows a method 300 which is implemented by a controller. In step 301 the controller is arranged to supply a molten metal 203 through an opening 204 of the furnace into the chamber 201. In step 302 the supply of liquid CO₂ occurs through the at least one nozzle 206. It is understood that the controller also controls the CO₂ supply parameters, such as pressure an/or temeprature. In step 303 the atomised powder 208 is produced by mixing the stream of molten metal 204 with the jet 205 of liquid CO₂ used as atomising medium. If it is determined that all the metal has been transformed into powder, the method proceeds to step 305 at which the evaporation of CO₂ occurs. If it is determined that the molten metal is still present in the furnace 202, then the process returns to step 302 of supplying more liquid CO₂ into the nozzle. Once all the previous steps 301-305 are completed, the process ends 306. It is understood that by using liquid carbon dioxide the components of the prior art apparatus 100 relating to dewatering, and then filtering and recycling water are not required as water-free liquid carbon dioxide is used instead.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

### Reference signs

- 100 -: water atomisation system
- 101 -: ladle/melter
- 102 -: tundish
- 103 -: chamber
- 104a, 104b -: nozzles
- 105 -: leaching tank
- 106 -: dewatering system
- 107 -: cooling/filtering/recycling system
- 108 -: (High Pressure) Pump

- 200 -: atomiser
- 201 -: chamber
- 202 -: furnace
- 203 -: molten metal
- 204 -: opening
- 205 -: jet
- 206 -: nozzle
- 207 -: pressure system
- 208 -: powder

## Claims

1. Method of producing a metal powder (208), the method comprising:
providing a stream of molten metal (203);
atomising the metal by directing a jet of fluid (205) towards the stream of molten metal, wherein the fluid comprises liquid carbon dioxide.

2. The method of claim 1, wherein the fluid is pressurised.

3. The method of claim 1 or 2, wherein the fluid is supercritical carbon dioxide.

4. The method of any preceding claim, wherein the jet of fluid is supplied through a nozzle (206).

5. The method of claim 5, wherein the nozzle (206) is a convergent-divergent nozzle.

6. The method of claim 1, wherein the fluid (205) is supplied at at least 5 bar pressure.

7. The method of claim 1, wherein the fluid (205) is supplied at less than -70 °C.

8. The method of any preceding claim, wherein the metal comprises iron or iron alloy.

9. The method of any preceding claim, wherein the metal powder (208) comprises substantially spherical solid particles having an aspect ratio between 1 and 1.2.
